# EUROPÄISCHE PATENTSCHRIFT

(11) **EP 0 745 028 B1**
(45) Veröffentlichungstag und Bekanntmachung des Hinweises auf die Patenterteilung: **01.12.1999**
(21) Anmeldenummer: 95905623.5
(22) Anmeldetag: 12.01.1995
(51) Int. Cl.: B29C 45/00, F16K 27/06

(54) **SPRITZGIESSVERFAHREN SOWIE DANACH HERGESTELLTES SPRITZGUSSTEIL**
INJECTION MOULDING PROCESS AND INJECTION MOULDING PRODUCED THEREBY
PROCEDE DE MOULAGE PAR INJECTION ET PIECE AINSI PRODUITE

(30) Priorität: 16.02.1994 DE 4404865
(43) Veröffentlichungstag der Anmeldung: 04.12.1996
(73) Patentinhaber: PFAFF GMBH, 79183 Waldkirch (DE)
(72) Erfinder: PFAFF, Adolf, D-79183 Waldkirch (DE)
(74) Vertreter: Schmitt, Hans, Dipl.-Ing.
(86) Internationale Anmeldenummer: EP9500108
(87) Internationale Veröffentlichungsnummer: WO9522450

(56) Entgegenhaltungen:
- WO-A-88/09713
- DE-A- 3 237 799
- DE-A- 3 637 462
- FR-A- 1 222 777
- US-A- 3 000 049

## Beschreibung

Die Erfindung bezieht sich auf ein Verfahren zum Herstellen eines Spritzgußteiles, das wenigstens zwei Teile aus unterschiedlichem Kunststoffmaterial aufweist, wobei diese Teile wenigstens einen Durchströmkanal aufweisen und in Arbeitsstellung dichtend ineinandergreifen und in dieser Stellung relativ zueinander bewegbar sind, wobei zunächst in einem ersten Spritzvorgang ein Außenteil gespritzt wird, und anschließend in einem zweiten Spritzvorgang in eine Innenhöhlung des Außenteiles ein Innenteil aus einem Kunststoffmaterial mit gegenüber dem Schwindmaß des Kunststoffmateriales des Außenteiles größerem Schwindmaß eingespritzt wird und wobei danach Dichtbereiche mit Schrägflächen zwischen den beiden Teilen durch Schwinden des Innenteil-Materiales aufgeschrumpft werden. Außerdem bezieht sich die Erfindung auf ein danach hergestelltes Spritzgußteil, insbesondere einen Hahn mit einem Außengehäuse und einem Küken.

Beim Herstellen von Absperr- oder Mehrwegehähnen aus Kunststoffteilen ist es bereits bekannt, die Einzelteile, nämlich das Außengehäuse und das oder die Hahnküken zur Montage ineinanderzuklipsen. Bei zahlreichen Materialien ist eine ausreichende Elastizität vorhanden, um dieses Einklipsen bei anschließend ausreichender Dichtigkeit zu ermöglichen. Allerdings ist hierbei nachteilig, daß hierbei nach dem Spritzgießen noch Montagearbeiten zum Zusammenfügen der Teile erforderlich sind.

Weiterhin besteht auch die Möglichkeit, das Hahnküken in einem ersten Spritzvorgang zu spritzen und dann in einem zweiten Spritzvorgang das Außengehäuse um das Küken herumzuspritzen. Wenn die verwendete Materialpaarung bezüglich der Schwindmaße und der Verarbeitungstemperatur dies zulassen und insbesondere auch so vorgesehen sind, daß das Material des Außenteiles ein größeres Schwindmaß als das Material des Innenteiles hat, führt dies auch zu einer guten Abdichtung.

Ist jedoch eine umgekehrte Materialpaarung gefordert, wobei das Innenteil auch eine niedrigere Verarbeitungstemperatur aufweist, ist dies nicht möglich. Lassen die Verarbeitungstemperaturen dies zu, so können nach dem Spritzen des Innenteiles und dem anschließenden Schwinden beim Erkalten keine hohen Anforderungen an die Abdichtung zwischen diesen beiden Teilen gestellt werden.

Man könnte zwar beim zweiten Spritzvorgang den Nachspritzdruck soweit erhöhen, daß eine mindestens dem Schwindmaß des Innenteiles entsprechende Verformung des Außenteiles auftritt. Untersuchungen haben jedoch gezeigt, daß diese Maßnahme außer zu einer Schwergängigkeit beim Verstellen auch zu Vorschädigungen des Außenteilmateriales führen kann, so daß die Gefahr besteht, daß es durch äußere Einflüsse während des späteren Gebrauchs zum Bruch des Teiles kommt.

Eine solche Vorschädigung des Außenteiles kann auch beim zweiteiligen Herstellen und einem anschließenden Einklipsen der Teile durch Überdehnen dabei auftreten.

Handelt es sich bei der aus den Spritzgußteilen gebildeten Vorrichtung um eine solche für den Einsatz im medizinischen Bereich, z. B. um eine sogenannte Hahnenbank, die für eine äußere Blutzirkulation eingesetzt wird, kann dies während einer Operation zu äußerst kritischen Situationen führen.

Für diese speziellen Anwendungsfälle wurden auch Untersuchungen durchgeführt, die belegen, daß im Material vorhandene Haarrisse unter dem Einfluß von Blut zu einem Auseinanderplatzen des Teiles führen können. Unter anderem aus physiologischen Gründen sind gerade im medizinischen Bereich bestimmte Materialien für solche Vorrichtungen vorgeschrieben, wobei dies auch Materialpaarungen mit einem Innenteil aus einem Material mit größerem Schwindmaß als dem des Außenmateriales umfaßt.

Aus der WO-A-88 09 713 ist bereits ein Verfahren gemäß dem Oberbegriff des Anspruchs zum Herstellen eines Spritzgußteiles gemäß dem Oberbegriff des Anspruchs 6 mit zwei aus unterschiedlichen Kunststoffen bestehenden Teilen, die in Arbeitsstellung dichtend ineinander greifen und zueinander bewegbar sind, bekannt. Das für das Gehäuse verwendete Material - Polycarbonat - hat ein geringeres Schwindmaß als das für das Küken verwendete Polyethylen. Die durch das Schwindmaß bedingte, maßliche Abweichung des inneren Formteiles hängt auch von dessen Volumen ab. Es ist deshalb schwierig, die für eine gute Abdichtung passende, maßliche Veränderung durch Schwindung zu erreichen, da einerseits durch konstruktive Vorgaben und andererseits durch die vom verwendeten Material vorgegebene Schwindung nur sehr begrenzte Einflußmöglichkeiten vorhanden sind.

Aufgabe der vorliegenden Erfindung ist es, ein Verfahren und ein danach hergestelltes Spritzgußteil zu schaffen, wobei mehrere zusammenarbeitende Teile durch Spritzgießen einsatzbereit hergestellt werden können, so daß Montagearbeiten vermieden werden. Dabei sollen Vorschädigungen der Teile sicher vermieden werden und außerdem soll trotzdem eine gute Abdichtung erzielt werden, die auch hohen Betriebsdrücken widersteht. Gleichzeitig soll auch eine leichtgängige Verstellbarkeit vorhanden sein. Schließlich soll die Möglichkeit bestehen, die durch Schwindung auftretende, tatsächliche, maßliche Veränderung des Innenteiles beeinflussen zu können.

Zur Lösung dieser Aufgabe wird erfindungsgemäß vorgeschlagen, daß beim ersten Spritzvorgang ein in seiner späteren Arbeitsstellung befindlicher, zum Außenteil beabstandeter Füllkörper des Innenteiles aus einem Material mit geringerem Schwindmaß als dem des übrigen Innenteiles gespritzt wird und daß anschließend beim zweiten Spritzvorgang der Füllkörper mit dem ein höheres Schwindmaß aufweisenden Kunststoff-Material umspritzt wird.

Bei diesem Verfahren wird einerseits das Schrumpfen des im zweiten Spritzvorgang eingespritzten Kunststoffmateriales ausgenutzt, um durch Aufschrumpfen auf die Schrägflächen gut abdichtende Dichtbereiche zu schaffen. Andererseits wirkt sich das höhere Schwindmaß des Innenteil-Materiales nur noch sehr gering und unwesentlich dort aus, wo das Volumen aus diesem Material durch den Füllkörper erheblich reduziert ist.

Durch den Füllkörper und dessen Außenkontur kann nämlich das Volumen beziehungsweise die Dicke des für die Außenschicht des Innenteiles verwendeten Spritzmateriales vorbestimmt und somit das tatsächliche Schwindmaß des Innenteiles oder bestimmter Bereiche des Innenteiles beeinflußt werden. Es besteht so die Möglichkeit, daß der Füllkörper so konturiert wird, daß in bestimmten Dichtbereichen, insbesondere zwischen den äußeren Dichtbereichen mit den Schrägflächen, nur eine dünne Beschichtung mit dem ein größeres Schwindmaß aufweisenden Material vorhanden ist, so daß sich Volumenänderungen in diesem Dichtbereich durch Schwinden des Außenschicht-Materiales praktisch nicht mehr auswirken.

Das erfindungsgemäße Spritzgußteil ist dadurch gekennzeichnet, daß sich in dem Innenteil zumindest im dichtflächennahen Bereich ein Füllkörper aus einem Kunststoffmaterial mit geringerem Schwindmaß als dem des Materiales des übrigen Innenteiles befindet.

Wie bereits in Verbindung mit dem erfindungsgemäßen Verfahren beschrieben wird dadurch das Volumen des anderen Innenteil-Materiales, welches ein vergleichsweise hohes Schwindmaß aufweist, verringert. Die absolute maßliche Veränderung des Innenteiles durch Schwinden ist dadurch nur noch sehr gering, so daß Undichtigkeiten durch Schwinden des Innenteiles vermieden werden.

Zweckmäßigerweise weist der Füllkörper zumindest im Dichtflächenbereich eine dünne Beschichtung mit dem Material des übrigen Innenteiles auf, wobei die Schichtdicke insbesondere auf das Schwindmaß des Innenteiles und die geforderte Abdichtung abgestimmt ist, vorzugsweise im Bereich einiger zehntel Millimeter liegt, zum Beispiel etwa sieben zehntel Millimeter beträgt. Bei einer prozentualen Schwindung von beispielsweise 1,5 Prozent würden sich somit nur noch äußerst geringe maßliche Veränderungen des Innenteiles einstellen, die im tausendstel Millimeterbereich liegen können.

Nach einer Ausführungsform der Erfindung ist vorgesehen, daß das Innenteil drehbar in der konturangepaßten Innenhöhlung des Außenteiles angeordnet ist, daß der Durchströmkanal quer zur Drehachse des Innenteiles verläuft und daß die aufgeschrumpften Dichtflächen beidseits des Durchströmkanales zumindest bereichsweise quer zur Drehachse verlaufende Ringflächen bilden. Die ringförmigen Dichtflächen umschließen hierbei in Drehrichtung die nach außen abzudichtenden Übergangsbereiche des Durchströmkanales zwischen Außen- und Innenteil.

Zweckmäßigerweise sind die Ring-Dichtflächen durch in die Kontur des Innenteiles eingreifende, umlaufende Vorsprünge gebildet. Einerseits wird dadurch das Bilden von Abdichtungen durch Schrumpfen ermöglicht und außerdem begünstigt eine solche Formgebung die Herstellung in Spritzgießtechnik und dabei insbesondere auch das Entformen.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine Aufsicht auf eine Hahnenbank mit zwei Mehrwegehähnen,
- Fig. 2: eine Längsschnittdarstellung und

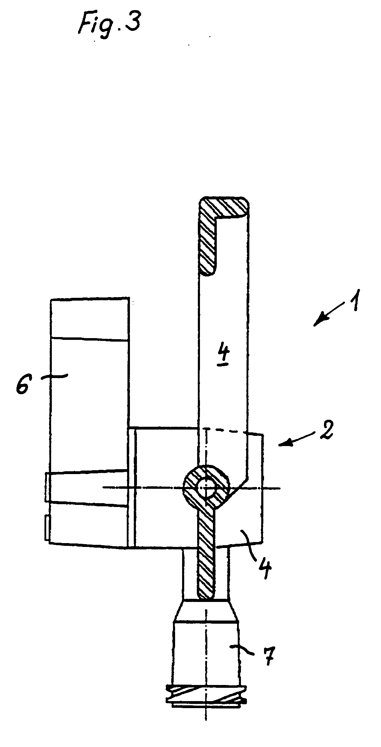

- Fig. 3: eine Querschnittdarstellung der in Figur 1 gezeigten Hahnenbank.

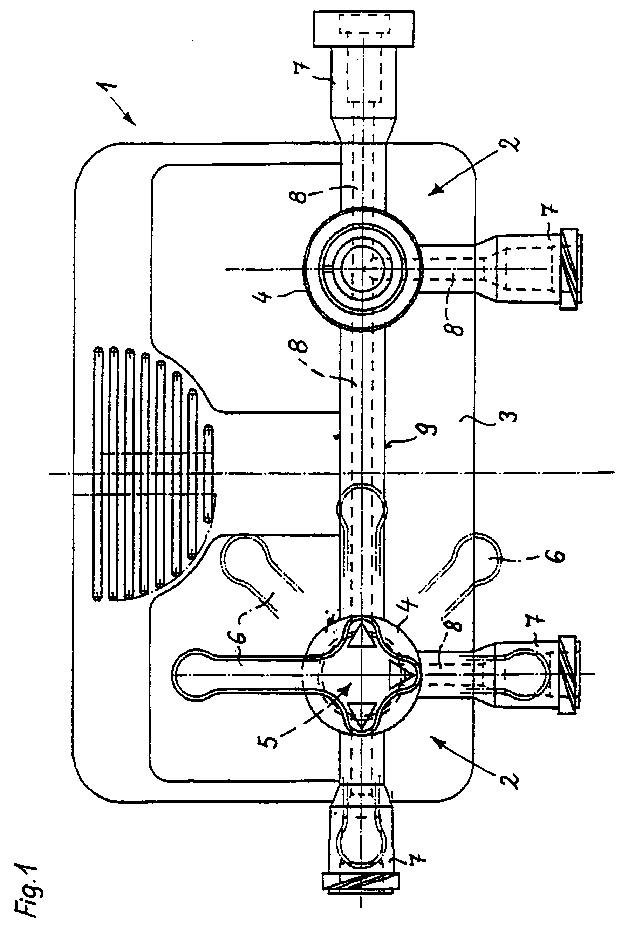

Eine in Figur 1 gezeigte Hahnenbank 1 weist zwei Mehrwegehähne 2 auf, die im Ausführungsbeispiel als Dreiwegehähne ausgebildet sind. Die Mehrwegehänne 2 sind vorzugsweise einstückig mit einer Trägerplatte 3 verbunden und weisen selbst ein Gehäuseteil 4 sowie ein Innenteil oder Küken 5 auf. Diese Küken läßt sich über einen Handhebel 6 in unterschiedliche Stellungen bringen. Der Handhebel 6 kann mit an das Innenteil angespritzt sein.

Die beiden Mehrwegehähne 2 weisen zwei Anschlußstutzen 7 mit jeweils darin befindlichen Durchströmkanälen 8 und ein Verbindungsrohr 9 auf, welches ebenfalls einen Durchströmkanal 8 hat. An die Anschlußstutzen 7 können Verbindungsschläuche mit Kupplungsteilen angeschlossen werden.

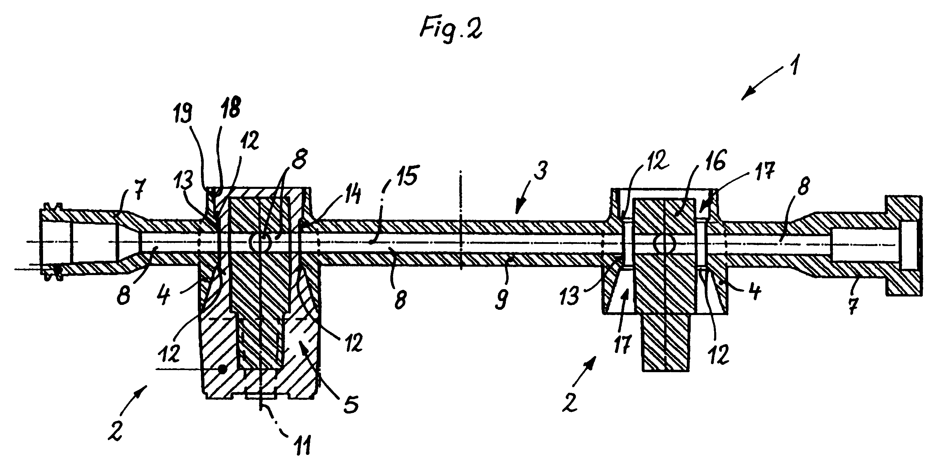

Zur Verdeutlichung sind in den Figuren 1 und 2 auf der rechten Seite Teile des Kükens und auch der Handhebel 6 weggelassen.

Die in den Figuren gezeigte Hahnenbank 1 wird bevorzugt im medizinischen Bereich eingesetzt. Für diesen Verwendungszweck bestehen die Gehäuseteile 4 sowie die einstückig damit verbundenen Bereiche der Hahnenbank aus einem Kunststoff mit geringem Schwindmaß, wobei vorzugsweise Polycarbonat oder auch Polysulfon verwendet wird.

Das direkt mit den Gehäuseteilen in Verbindung kommende Material des beziehungsweise der Küken 5 besteht vorzugsweise aus Polyethylen oder Polypropylen. Die Materialpaarung mit dem Polycarbonat oder dergleichen weist günstige Gleiteigenschaften bei gleichzeitig guter Abdichtung auf. Allerdings hat das für das Innenteil oder Küken 5 verwendete Material den Nachteil, daß es ein wesentlich größeres Schwindmaß aufweist als das für die Gehäuseteile 4 verwendete Material.

Um nun durch diese Materialpaarung beim Herstellen keine Undichtigkeiten zu erhalten, sind im Ausführungsbeispiel mehrere Maßnahmen vorgesehen, die aber bereits auch für sich einzeln bei bestimmten Anwendungsfällen für eine ausreichende Dichtigkeit sorgen würden. Die Kombination mehrere erfindungsgemäßer Maßnahmen schafft jedoch die Voraussetzung für eine sehr gute Abdichtung auch unter sehr hohen Druckbeanspruchungen, die beispielsweise auch im Bereich von 80 bar liegen können. Als eine erste Maßnahme ist vorgesehen, daß koaxial zur Drehachse 11 der Küken 5 verlaufende Ring-Dichtflächen 12 beidseitig der Übergangstrennstelle zwischen Gehäuseteil 4 und Küken 5 bei dem Durchströmkanal 8 vorgesehen sind (Figur 2). Zur Bildung dieser Ring-Dichtflächen 12 weist das Gehäuseteil 4 einen im Bereich des Durchströmkanales nach innen vorstehenden Eingreifbund 13 auf, dessen Ränder die Dichtflächen 12 und den Übergang zu der übrigen Gehäusewand bilden.

Als komplementäre Formung ist im Innenteil 5 eine Ringnut 14 vorhanden, so daß die daran angrenzenden Dichtflächen des Innenteiles 5 die gegenüberliegenden Dichtflächen des Gehäuseteiles 4 umgreifen beziehungsweise umschließen. Die Dichtflächen sind hier durch etwa 45°-Anfasungen gebildet, könnten aber auch durch runde oder gerundete Übergangsflächen gebildet sein.

Die Dichtflächen 12 des Innenteiles 5 schrumpfen nach dem Spritzvorgang zum Herstellen des Innenteiles 5 auf die vorhandenen, schrägen Dichtflächen 12 des Gehäuseteiles 4 auf. Es wird somit das größere Schrumpfungsmaß des Innenteiles 5 zum Aufbau von Ring-Abdichtzonen verwendet. Damit ist eine wirksame Abdichtung nach außen hin geschaffen.

Um nun auch zu verhindern, daß am Außenumfangs-Ringbereich um das Küken herum Undichtigkeiten entstehen, ist zusätzlich vorgesehen, daß der Eingreifbund 13 beziehungsweise die Ringnut 14 Schrägflächen, insbesondere zur Längsmittelachse 15 hin verlaufende Konusflächen aufweisen. Aus Platzgründen werden diese Konusflächen nicht direkt in Verlängerung der schrägen Ring-Dichtflächen 12 verlaufen, sondern mit einem wesentlich flacheren Winkel. Allerdings ist hierbei zu berücksichtigen, daß mit abnehmendem Schrägwinkel dieser Konusflächen auch das Maß der Abdichtung durch Schrumpfen abnimmt. Deshalb ist in dem Innenteil (Küken) 5 ein Füllkörper aus einem Kunststoffmaterial mit geringerem Schwindmaß als dem des Materiales des übrigen Innenteiles 5 vorgesehen. Dieser Füllkörper 16 ist so konturiert, daß im Dichtbereich, insbesondere zwischen den Ring-Dichtflächen 12 nur eine dünne Beschichtung mit dem ein größeres Schwindmaß aufweisenden Material des Kükens vorhanden ist. Die Schichtdicke kann dabei im zehntel Millimeterbereich liegen, so daß sich Volumenänderungen in diesem Dichtbereich durch Schwinden des Außenschicht-Materiales praktisch nicht mehr auswirken.

Bevorzugt besteht der Füllkörper 16 aus dem gleichen Material wie das Gehäuseteil 4. Wie später noch beschrieben, kann so die Hahnenbank komplett in nur zwei Spritzvorgängen hergestellt werden.

Im gezeigten Ausführungsbeispiel ist der Füllkörper 16 als im wesentlichen zylindrisches Kernteil ausgebildet, dessen Mantelflächen im Dichtbereich zwischen den beiden Ring-Dichtflächen 12 parallel zu der Trennfläche zwischen Gehäuseteil 4 und Innenteil 5 verlaufen. Bedarfsweise könnte die Außenkontur des Füllkörpers 16 auch an den Verlauf des Innenteiles 5 angepaßt sein, so daß auch in den übrigen Kontaktbereichen zwischen Innenteil 5 und Gehäuseteil 4 eine verringerte Auswirkung des Materialschwundes auftritt.

Bevorzugt besteht das Gehäuseteil 4 und auch der Füllkörper 16 aus einem Material mit geringem Schwindmaß, insbesondere aus Polycarbonat, gegebenenfalls auch aus Polysulfon und das Innenteil 5 besteht bevorzugt aus Polyethylen oder Polypropylen.

Bei der Herstellung des Spritzgußteiles, im Ausführungsbeispiel der Hahnenbank 1, wird zunächst in einem ersten Spritzvorgang das Außenteil, bestehend aus dem beziehungsweise den Gehäuseteilen 4 und der Trägerplatte 3 gespritzt. Im Bereich der Innenhöhlungen 17 in den Gehäuseteilen 4 sind dabei Formkerne eingefahren, die den Zwischenraum zwischen Innenhöhlungs-Wand und der Außenkontur des Füllkörpers 16 ausfüllen. In diesem beziehungsweise diesen Kernen befindet sich eine Einspritzbohrung, so daß bei dem ersten Spritzvorgang auch die Füllkörper 16 mitgespritzt werden.

Während dieses ersten Spritzvorganges werden die Durchströmkanäle 8 durch Kanalkerne gebildet, die auch nach dem Herausfahren der in der Ebene der Längsmittelachse 15 auftrennbaren, in die Innenhöhlungen 17 eingreifenden Formkerne im Spritzgußteil verbleiben. Über diese Kanalkerne werden die ansonsten keine Verbindung zu den umgebenden Gehäuseteilen aufweisenden Füllkörper 16 zwischen dem ersten und dem zweiten Spritzvorgang gehalten. Dies entspricht etwa der Darstellung rechtsseitig in Figur 2, wobei hier jedoch die Kanalkerne herausgezogen sind.

In einem zweiten Spritzvorgang werden dann die Innenteile 5 vorzugsweise auch zusammen mit den Handhebeln 6 gespritzt, wobei hier insbesondere der Füllkörper 16 umspritzt beziehungsweise die Innenhöhlungen 17 ausgespritzt werden. Beim Erkalten des beim zweiten Spritzvorgang eingebrachten Kunststoffmateriales schrumpft dieses etwas zusammen, wobei die Dichtflächen 12 zunehmend aufeinandergepreßt werden. In dem Zwischenbereich zwischen diesen Dichtflächen 12 wird eine sich maßlich merkbar auswirkende Schrumpfung vermieden, weil die Schichtdicke zwischen Füllkörper 16 und der Trennfläche zum Genäuseteil 4 im Bereich des Durchströmkanales so gering ist, daß sich dadurch keine merkbare Reduzierung der Abdichtung nicht einstellt. Die Restschwindung kann ohne weiteres ausgeglichen werden, indem beim Einspritzen des zweiten Kunststoff-Spritzmateriales der Nachspritzdruck so dimensioniert wird, daß dieses "Restschwinden" ausgeglichen wird. Der Nachspritzdruck ist dabei aber nur so groß, daß er mit Sicherheit nur zu einer elastischen Verformung ohne Beschädigung des Materiales des Gehäuseteiles 4 führt.

Wie in Figur 1 erkennbar, läßt sich das Küken 5 über den Handhebel 6 außer in die vier unterschiedlichen Durchflußstellungen auch in dazwischen liegende Schließstellungen bringen. Dies ist strichpunktiert in Figur 1 angedeutet. Um diese Betriebsstellungen und auch die Schließstellungen für eine vereinfachte Handhabung gut fühlen zu können, sind in diesen Stellungen Rasten vorgesehen.

Im Ausführungsbeispiel weist dazu das Innenteil 5 an seinem dem Handhebel 6 abgewandten Ende am Außenumfang kleine Rastvorsprünge 18 auf, die in den jeweils passenden Positionen in Rastvertiefungen 19 des in diesem Bereich hülsenartigen Gehäuseteiles 4 eingreifen.

Da das verwendete Material für das Gehäuseteil 4 nur eine vergleichsweise geringe Verformbarkeit aufweist, ist hier eine reduzierte Wandstärke vorgesehen. Die Rastvorsprünge 18 am Küken 5 werden auch durch den Füllkörper 16 mit abgestützt, so daß sich deren vergleichsweise hohe Elastizität und Nachgiebigkeit in diesem Bereich nicht nachteilig auswirkt.

## Patentansprüche

1. Verfahren zum Herstellen eines Spritzgußteiles, das wenigstens zwei Teile aus unterschiedlichem Kunststoffmaterial aufweist, wobei diese Teile wenigstens einen Durchströmkanal aufweisen und in Arbeitsstellung dichtend ineinandergreifen und in dieser Stellung relativ zueinander bewegbar sind, wobei zunächst in einem ersten Spritzvorgang ein Außenteil (4) gespritzt wird, und anschließend in einem zweiten Spritzvorgang in eine Innenhöhlung (17) des Außenteiles (4) ein Innenteil (5) aus einem Kunststoffmaterial mit gegenüber dem Schwindmaß des Kunststoffmateriales des Außenteiles (4) größerem Schwindmaß eingespritzt wird und wobei danach Dichtbereiche mit Schrägflächen (12) zwischen den beiden Teilen durch Schwinden des Innenteil-Materiales aufgeschrumpft werden, **dadurch gekennzeichnet**, daß beim ersten Spritzvorgang ein in seiner späteren Arbeitsstellung befindlicher, zum Außenteil beabstandeter Füllkörper (16) des Innenteiles (5) aus einem Material mit geringerem Schwindmaß als dem des übrigen Innenteiles (5) gespritzt wird und daß anschließend beim zweiten Spritzvorgang der Füllkörper (16) mit dem ein höheres Schwindmaß aufweisenden Kunststoff-Material umspritzt wird.

2. Verfahren nach Anspruch 1, dadurch gekennzeichnet, daß der Füllkörper (16) beim ersten Spritzvorgang zusammen mit dem Außenteil (4) mitgespritzt wird.

3. Verfahren nach Anspruch 1 oder 2, dadurch gekennzeichnet, daß der Füllkörper (16) zwischen dem ersten und dem zweiten Spritzvorgang durch in den oder die Durchströmkanäle (8) eingreifende Kerne gehalten wird.

4. Verfahren nach einem der Ansprüche 1 bis 3, dadurch gekennzeichnet, daß beim zweiten Spritzvorgang der Nachspritzdruck so bemessen wird, daß eine beim Außenteil (4) auftretende Verformung im elastischen Verformungsbereich liegt.

5. Verfahren nach einem der Ansprüche 1 bis 4, dadurch gekennzeichnet, daß für das Außenteil (4) Polycarbonat oder Polysulfon und für das Innenteil Polyethylen oder Polypropylen verwendet wird.

6. Spritzgußteil mit wenigstens zwei aus unterschiedlichen Kunststoffen bestehenden, relativ zueinander bewegbaren und gegeneinander abdichtenden Einzelteilen, wobei eines der Einzelteile eine Innenhöhlung zur zumindest teilweisen Aufnahme des anderen Einzelteiles aufweist und ein Durchströmkanal in dem Spritzgußteil vorgesehen ist, insbesondere Hahn mit einem Außengehäuse und einem Küken, wobei im Übergangsbereich zwischen den beiden Einzelteilen (4, 5) den Durchströmkanal (8) seitlich abdichtende, durch Schrumpfen des ein größeres Schwindmaß als das Außenteil (4) aufweisenden Innenteiles (5) aufgeschrumpfte Dichtflächen (12) vorgesehen sind, insbesondere hergestellt gemäß dem Verfahren nach einem der Ansprüche 1 bis 5, **dadurch gekennzeichnet**, daß sich in dem Innenteil (5) zumindest im dichtflächen-nahen Bereich ein Füllkörper (16) aus einem Kunststoffmaterial mit geringerem Schwindmaß als dem des Materiales des übrigen Innenteiles (5) befindet.

7. Spritzgußteil nach Anspruch 6, dadurch gekennzeichnet, daß das Innenteil (5) drehbar in der vorzugsweise konturangepaßten Innenhöhlung des Außenteiles (4) angeordnet ist, daß der Durchströmkanal (8) quer zur Drehachse des Innenteiles verläuft und daß die aufgeschrumpften Dichtflächen (12) beidseits des Durchströmkanales (8) zumindest bereichsweise quer zur Drehachse (11) verlaufende Ringflächen bilden.

8. Spritzgußteil nach Anspruch 7, dadurch gekennzeichnet, daß die Ring-Dichtflächen (12) durch in die Kontur des Innenteiles (5) eingreifende, umlaufende Vorsprünge gebildet sind.

9. Spritzgußteil nach Anspruch 7 oder 8, dadurch gekennzeichnet, daß die Ring-Dichtflächen (12) am Außenteil (4) beziehungsweise am Gehäuseteil des Hahnes durch Schrägflächen beidseitig eines in die Innenhöhlung (17) im Bereich des Durchströmkanales (8) vorstehenden Eingreifbundes (13) gebildet sind und daß das Innenteil (5) beziehungsweise Küken eine zum Eingreifbund und dessen seitliche Schrägflächen (12) komplementäre Formgebung mit einer Ringnut (14) aufweist.

10. Spritzgußteil mit Anspruch 9, dadurch gekennzeichnet, daß der Eingreifbund (13) beziehungsweise die Ringnut (14) selbst Schrägflächen, vorzugsweise zur Längsmittelachse (15) der Innenhöhlung hin verlaufende Konusflächen aufweist.

11. Spritzgußteil nach einem der Ansprüche 6 bis 10, dadurch gekennzeichnet, daß der Füllkörper (16) aus dem gleichen Kunststoffmaterial wie das übrige Außenteil (4) besteht.

12. Spritzgußteil nach einem der Ansprüche 6 bis 11, dadurch gekennzeichnet, daß der Füllkörper (16) zumindest im Dichtflächenbereich eine dünne Beschichtung mit dem Material des übrigen Innenteiles aufweist und daß die Schichtdicke insbesondere auf das Schwindmaß des Innenteiles (5) und die geforderte Abdichtung abgestimmt ist, vorzugsweise im Bereich einiger zehntel Millimeter liegt, zum Beispiel etwa sieben zehntel Millimeter beträgt.

13. Spritzgußteil nach einem der Ansprüche 6 bis 12, dadurch gekennzeichnet, daß der Füllkörper (16) als Kernteil mit einem gegenüber dem Innenteil-Umriß reduzierten, an die Außenkontur des Innenteiles vorzugsweise etwa angepaßten Außenkontur ausgebildet ist.

14. Spritzgußteil nach einem der Ansprüche 6 bis 13, dadurch gekennzeichnet, daß als Kunststoffmaterial für das Außenteil und dergleichen Polycarbonat oder Polysulfon und für das Innenteil Polyethylen oder polypropylen vorgesehen sind.

15. Spritzgußteil nach einem der Ansprüche 6 bis 14, dadurch gekennzeichnet, daß das Außenteil (4) und das Innenteil (5) Bestandteil eines Hahnes, vorzugsweise eines Mehrwegehahnes sind und daß gegebenenfalls mehrere Hähne eine Hahnenbank bilden.

16. Spritzgußteil nach einem der Ansprüche 6 bis 15, dadurch gekennzeichnet, daß bei dem oder den Hahnen Rastvorsprünge (18) und Rastvertiefungen (19) vorgesehen sind, die jeweils in den Durchflußstellungen sowie in den Sperrstellungen in Eingriff sind.

## Claims

1. Process for producing an injection moulded component which comprises at least two parts consisting of different plastics materials, these parts having at least one throughflow channel and engaging tightly in one another in the working position and being movable relative to one another in this position, wherein initially in a first injection process an outer part (4) is injected and then in a second injection process an inner part (5) consisting of a plastics material having a shrinkage greater than the shrinkage of the plastics material of the outer part (4) is injected into an inner cavity (17) of the outer part, and then sealing areas with inclined surfaces (12) are shrunk on between the two parts by shrinking the material of the inner part, characterised in that in the first injection process a packing member (16) of the inner part (5) consisting of a material with a lesser shrinkage than the remainder of the inner part (5), this member (16) being located in its eventual operating position and spaced from the outer part, is injected and subsequently, in the second injection process, the packing member (16) is moulded with the plastics material having a greater shrinkage.

2. Process according to claim 1, characterised in that the packing member (16) is injected together with the outer part (4) in the first injection process.

3. Process according to claim 1 or 2, characterised in that the packing member (16) is held between the first and second injection processes by cores engaging in the throughflow channel or channels (8).

4. Process according to one of claims 1 to 3, characterised in that in the second injection process the additional injection pressure is such that any deformation occurring in the outer part (4) is within the elastic deformation limits.

5. Process according to one of claims 1 to 4, characterised in that polycarbonate or polysulphone is used for the outer part (4) and polyethylene or polypropylene is used for the inner part.

6. Injection moulded component having at least two individual parts consisting of different plastics which are movable relative to one another and fit tightly against one another, wherein one of the individual parts has an inner cavity for at least partially accommodating the other individual part and a throughflow channel is provided in the injection moulded component, more particularly a valve with an outer housing and a plug, wherein, in the transitional region between the two individual parts (4, 5), sealing surfaces (12) are provided which laterally seal off the throughflow channel (8) and which are shrunk on by shrinking the inner part (5) having a greater shrinkage than the outer part (4), more particularly produced by the process according to one of claims 1 to 5, characterised in that in the inner part (5), at least in the region close to the sealing surfaces, there is a packing member (16) consisting of a plastics material having a lesser shrinkage than the material of the remainder of the inner part (5).

7. Injection moulded component according to claim 6, characterised in that the inner part (5) is rotatably mounted in the preferably contour-fitting inner cavity of the outer part (4), in that the throughflow channel (8) extends transversely with respect to the rotation axis of the inner part and in that the shrunk-on sealing surfaces (12) on both sides of the throughflow channel (8) form, at least in parts, annular surfaces extending transversely with respect to the rotation axis (11).

8. Injection moulded component according to claim 7, characterised in that the annular sealing surfaces (12) are formed by encircling projections engaging in the contour of the inner part (5).

9. Injection moulded component according to claim 7 or 8, characterised in that the annular sealing surfaces (12) are formed on the outer part (4) or on the housing portion of the valve by inclined surfaces on each side of an engaging flange (13) projecting into the inner cavity (17) in the region of the throughflow channel (8) and in that the inner part (5) or plug is shaped, with an annular groove (14), so as to be complementary to the engaging flange and its lateral inclined surfaces (12).

10. Injection moulded component according to claim 9, characterised in that the engaging flange (13) or the annular groove (14) itself has inclined surfaces, preferably cone surfaces extending towards the central longitudinal axis (15) of the inner cavity.

11. Injection moulded component according to one of claims 6 to 10, characterised in that the packing member (16) consists of the same plastics material as the rest of the outer part (4).

12. Injection moulded component according to one of claims 6 to 11, characterised in that the packing member (16) has, at least in the region of the sealing surfaces, a thin coating of the material of the remainder of the inner part and in that the thickness of the coating is adapted in particular to the shrinkage of the inner part (5) and the required seal, preferably in the region of a few tenths of a millimetre, for example about seven-tenths of a millimetre.

13. Injection moulded component according to one of claims 6 to 12, characterised in that the packing member (16) is constructed as a core member the outer contour of which is reduced by comparison with the contour of the inner part and which preferably substantially matches the outer contour of the inner part.

14. Injection moulded component according to one of claims 6 to 13, characterised in that polycarbonate or polysulphone is used as the plastics material for the outer part and the like and polyethylene or polypropylene is provided for the inner part.

15. Injection moulded component according to one of claims 6 to 14, characterised in that the outer part (4) and the inner part (5) are components of a valve, preferably a multi-way valve, and that optionally a plurality of valves form a bank of valves.

16. Injection moulded component according to one of claims 6 to 15, characterised in that latching projections (18) and latching indentations (19) are provided in the or each valve, these projections and indentations engaging in the throughflow positions and in the locking positions.

## Revendications

1. Procédé de fabrication d'une pièce moulée par injection qui comporte au moins deux parties en matériaux plastiques différents, ces parties présentant au moins un canal de passage et s'engageant en étanchéité l'une dans l'autre en position de travail et étant, dans cette position, mobiles l'une par rapport à l'autre, procédé suivant lequel, au cours d'une première opération d'injection, on moule par injection une partie extérieure (4), puis, au cours d'une deuxième opération d'injection, on moule par injection dans une cavité intérieure (17) de la partie extérieure (4) une partie intérieure (5) constituée d'un matériau plastique dont la mesure de retrait est supérieure à la mesure de retrait du matériau plastique de la partie extérieure (4), à la suite de quoi, par le retrait du matériau de la partie intérieure, des régions d'étanchéité à faces biaises (12) sont frettées entre les deux parties, **caractérisé** en ce que, lors de la première opération d'injection, on moule par injection un corps de remplissage (16) de la partie intérieure (5), corps qui est constitué d'un matériau dont la mesure de retrait est inférieure à celle du reste de la partie intérieure (5), et qui est distant de la partie extérieure et se trouve dans sa position ultérieure de travail, et en ce que, lors de la deuxième opération d'injection, on enrobe ensuite par injection le corps de remplissage (16) du matériau plastique présentant une mesure de retrait supérieure.

2. Procédé selon la revendication 1, **caractérisé** en ce que le corps de remplissage (16) est conjointement moulé par injection avec la partie extérieure (4) lors de la première opération d'injection.

3. Procédé selon la revendication 1 ou 2, **caractérisé** en ce que le corps de remplissage (16) est maintenu, entre la première et la deuxième opération d'injection, par des noyaux s'engageant dans le ou les canaux de passage (8).

4. Procédé selon une des revendications 1 à 3, **caractérisé** en ce que, lors de la deuxième opération d'injection, la pression de réinjection est réglée de telle sorte qu'une déformation apparaissant pour la partie extérieure (4) se situe dans la plage de déformation élastique.

5. Procédé selon une des revendications 1 à 4, **caractérisé** en ce qu'on utilise pour la partie extérieure (4) du polycarbonate ou du polysulfone, et pour la partie intérieure du polyéthylène ou du polypropylène.

6. Pièce moulée par injection comportant au moins deux parties individuelles constituées de matériaux plastiques différents, mobiles et étanchées l'une par rapport à l'autre, une des parties individuelles présentant une cavité intérieure pour recevoir au moins partiellement l'autre partie individuelle et un canal de passage étant prévu dans la pièce moulée par injection, ladite pièce étant notamment un robinet comportant un boîtier extérieur et un boisseau, des faces d'étanchéité (12) étant prévues dans la région de transition entre les deux parties individuelles (4, 5), faces qui étanchent latéralement le canal de passage (8) et sont obtenues par frettage de la partie intérieure (5) présentant une plus grande mesure de retrait que la partie extérieure (4), et ladite pièce étant notamment fabriquée d'après le procédé selon une des revendications 1 à 5, **caractérisée** en ce qu'un corps de remplissage (16) se trouve dans la partie intérieure (5) au moins dans la région proche des faces d'étanchéité, corps qui est constitué d'un matériau plastique dont la mesure de retrait est inférieure à celle du matériau du reste de la partie intérieure (5).

7. Pièce moulée par injection selon la revendication 6, **caractérisée** en ce que la partie intérieure (5) est disposée rotative dans la cavité intérieure, de préférence d'un contour adapté, de la partie extérieure (4), en ce que le canal de passage (8) s'étend transversalement à l'axe de rotation de la partie intérieure, et en ce que les faces d'étanchéité (12) frettées forment, de part et d'autre du canal de passage (8), des faces annulaires s'étendant au moins sectoriellement transversalement à l'axe de rotation (11).

8. Pièce moulée par injection selon la revendication 7, **caractérisée** en ce que les faces d'étanchéité annulaires (12) sont formées par des saillies entourantes qui s'engagent dans le contour de la partie intérieure (5).

9. Pièce moulée par injection selon la revendication 7 ou 8, **caractérisée** en ce que les faces d'étanchéité annulaires (12) sont formées, sur la partie extérieure (4) ou encore sur la partie de boîtier du robinet, par des faces biaises de part et d'autre d'un collet d'engagement (13) faisant saillie dans la cavité intérieure (17) dans la région du canal de passage (8), et en ce que la partie intérieure (5) ou encore le boisseau présente une conformation complémentaire du collet d'engagement et de ses faces biaises latérales (12), avec une rainure annulaire (14).

10. Pièce moulée par injection selon la revendication 9, **caractérisée** en ce que le collet d'engagement (13) et/ou la rainure annulaire (14) présentent eux-mêmes des faces bases, de préférence des faces coniques s'étendant en direction de l'axe médian longitudinal (15) de la cavité intérieure.

11. Pièce moulée par injection selon une des revendications 6 à 10, **caractérisée** en ce que le corps de remplissage (16) est constitué du même matériau plastique que le reste de la partie extérieure (4).

12. Pièce moulée par injection selon une des revendications 6 à 11, **caractérisée** en ce que le corps de remplissage (16) présente, au moins dans la région des faces d'étanchéité, un mince revêtement du matériau du reste de la partie intérieure, et en ce que l'épaisseur de couche est notamment adaptée à la mesure de retrait de la partie intérieure (5) et à l'étanchement requis, et de préférence est de l'ordre de quelques dixièmes de millimètre, par exemple est égale à environ sept dixièmes de millimètre.

13. Pièce moulée par injection selon une des revendications 6 à 12, **caractérisée** en ce que le corps de remplissage (16) est conçu comme partie centrale avec un contour extérieur réduit par rapport au contour de la partie intérieure, et de préférence approximativement adapté au contour extérieur de la partie intérieure.

14. Pièce moulée par injection selon une des revendications 6 à 13, **caractérisée** en ce qu'il est prévu comme matériau plastique pour la partie extérieure et analogue du polycarbonate ou du polysulfone, et pour la partie intérieure du polyéthylène ou du polypropylène.

15. Pièce moulée par injection selon une des revendications 6 à 14, **caractérisée** en ce que la partie extérieure (4) et la partie intérieure (5) font partie d'un robinet, de préférence d'un robinet à plusieurs voies, et en ce que, éventuellement, plusieurs robinets forment un ensemble de robinetterie.

16. Pièce moulée par injection selon une des revendications 6 à 15, **caractérisée** en ce qu'il est prévu, sur le ou les robinets, des saillies de crantage (18) et des renfoncements de crantage (19), qui sont respectivement en engagement dans les positions d'écoulement ainsi que dans les positions d'arrêt.
